(19) Europäisches Patentamt
European Patent Office
Office européen des brevets

(11) Veröffentlichungsnummer : **0 354 422 B1**

# (12) EUROPÄISCHE PATENTSCHRIFT

(45) Veröffentlichungstag der Patentschrift :
**03.06.92 Patentblatt 92/23**

(51) Int. Cl.$^5$ : **F01D 25/12**, F01D 11/06

(21) Anmeldenummer : **89113942.0**

(22) Anmeldetag : **28.07.89**

## (54) Gasturbine mit einer verdichterseitigen Lagerkammer.

(30) Priorität : **02.08.88 DE 3826217**

(43) Veröffentlichungstag der Anmeldung :
**14.02.90 Patentblatt 90/07**

(45) Bekanntmachung des Hinweises auf die Patenterteilung :
**03.06.92 Patentblatt 92/23**

(84) Benannte Vertragsstaaten :
**DE ES FR GB IT SE**

(56) Entgegenhaltungen :
**EP-A- 0 128 850**

(56) Entgegenhaltungen :
**FR-A- 2 278 024**
**GB-A- 702 931**
**GB-A- 2 111 607**
**GB-A- 2 119 858**
**US-A- 2 603 420**
**PATENT ABSTRACTS OF JAPAN, Band 9, Nr. 215 (M-409)[1938], 3. September 1985**

(73) Patentinhaber : **MTU MOTOREN- UND TURBINEN-UNION MÜNCHEN GMBH**
**Dachauer Strasse 665 Postfach 50 06 40**
**W-8000 München 50 (DE)**

(72) Erfinder : **Firsching, Axel**
**Allinger Strasse 10**
**W-8034 Germering (DE)**

EP 0 354 422 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

In der turbinenseitigen Lagerkammer von Gasturbinentriebwerken, insbesondere für Flugzeuge, sind üblicherweise die Wellen turbinenseitig mittels Kugel- oder Rollenlager gelagert. Dabei sind die Lager mittels eines gemeinsamen Hohlraumes, der Lagerkammer, verbunden. Da die Lager mit Öl geschmiert werden, besteht die Gefahr, daß der dabei entstehende Ölnebel durch die Spalte zwischen rotierenden und feststehenden Turbinenteilen entweicht und in den Strömungskanal gelangt. Neben erhöhtem Ölverlust und Umweltverschmutzung kann es zu Ölbränden an heißen Turbinenteilen kommen. Aus diesem Grund ist um die Lagerkammer eine Sperrluftkammer konstruiert, die mit Druckluft höheren statischen Druckes als der in der Lagerkammer befindliche beaufschlagt wird. Hierdurch wird verhindert, daß Ölnebel aus der Lagerkammer austreten können. Die Sperrluftkammer wird dabei von Druckluft aus dem Hochdruckverdichter versorgt. Analog ist die verdichterseitige Lagerung der Wellen radial innerhalb der Verdichter ausgeführt. Bei 3-Wellentriebwerken sind üblicherweise zwei verdichterseitige lager-kammern vorgesehen, eine für die Lagerung der Niederdruckwelle, eine gemeinsame für die Mittel- und Hochdruckverdichterwelle. Die verdichterseitige Sperrluftkammer wird dabei vom Niederdruckverdichter, bzw. bei einer 3-Wellenausführung vom Mitteldruckverdichter gespeist.

Problematisch dabei ist, daß zwischen beiden Wellen ein nie ganz abdichtbarer Spalt in Form eines Zwischenwellenraumes verbleibt, da wegen der hohen Relativdrehzahl der entgegengesetzt rotierenden Wellen eine Abdichtung nur über berührungsfreie Dichtungen geschehen kann. Wegen der verschiedenen Lagerkammer- und Sperrluftkammerdrücke beiderseits des Zwischenwellenraumes ergibt sich zwangläufig eine mit Ölnebel versetzter Luftstrom zwischen den Wellen von der turbinenseitigen zur verdichterseitigen Sperrluftkammer oder umgekehrt (Zwischenwellenströmung = intershaft flow = ISF). Dieser ISF muß, da er nicht auf 0 haltbar ist, einen bestimmten Durchsatz erreichen, weil sonst durch die kontrarotierenden Wellen eine zu starke Aufheizung des Ölnebels mit der Gefahr eines Zwischenwellenfeuers entstehen könnte.

Ein aus der GB-A-21 11 607 bekanntes Zwei-Wellen-Zweistrom-Triebwerk mit Frontgebläse behandelt ausschließlich bei einer Verdichter-Lagerkammer die Entnahme eines Gebläseluftanteils, z.B. über eine hohle Stützstrebe und eine daran eingeschlossene Leitung hinweg, in eine der Lagerkammer benachbarte Sperrluftkammer, die mit einer auf der Welle des Niederdrucksystems aufsitzenden Bürstendichtung zur Lagerkammer hin abgedichtet ist; ein "normaler Weise" geschlossenes Steuerventil soll erst bei Unterschreitung eines vorgebenen Druckverhältnisses (Druckdifferenz) zwischen dem Lagerkammer- und dem Sperrluftkammerdruck (stark gedrosselter Förderstrom des Fan) öffnen und das geforderte Druckverhältnis stabilisieren; dabei soll das Steuerventil eine Sperrluftentnahmeverbindung zwischen dem Hochdruckverdichter und der Sperrluftkammer herstellen und so eine Ölrezirkulation in den Hauptstrom verhindern. Dabei wirkt ein gemeinsames Stellglied mit Kolben im Zylinder des Steuerventils mit einer Differenzdruckmeßeinrichtung zusammen, in der dieses Stellglied mittels weiteren Kolbens unter einseitiger Federbelastung ebenfalls axial verschiebbar geführt ist; auf einer Seite des weiteren Kolbens soll der Lagerkammerdruck auf der anderen Seite der Sperrluftkammerdruck aufgebracht werden.

Aufgabe der Erfindung ist es, bei einem Gasturbinen-Flugtriebwerk nach dem Oberbegriff bzw. dem einleitenden Teil des Patentanspruchs 1 das Ausbrechen von Zwischenwellenfeuern bei beliebigen Flugzuständen sicher zu verhindern, wobei gleichzeitig das Austreten von Ölnebel in den Gashauptkanal unterbunden werden soll.

Erfindungsgemäß wird die Aufgabe durch die im Kennzeichnungsteil des Patentanspruchs 1 angegebenen Merkmale gelöst.

Dabei steuert vorteilhaft das Ventil den Sperrluftdruck in der turbinenseitigen Lagerkammer als Funktion für den Flugzustand repräsentativer Parameter derart, daß über den gesamten Betriebszustand im Zwischenwellenraum eine zur Verhinderung von Öl-Nebelfeuer vorgegebene Druchströmmenge ($\dot{V}1$,$\dot{V}2$,$\dot{V}3$) unter gleichzeitiger Aufrechthaltung der benötigten Druckdifferenz zwischen verdichterseitiger Lager- und Sperrluftkammer vorliegt. Dies ist insbesondere im Hinblick auf folgende flug-technische Überlegungen vorteilhaft.

Bei großen Fluggeschwindigkeiten würde, wegen des erhöhten Staudruckes der Druck im Hochdruckverdichter steigen, so daß über die Sperrluftleitung auch der Druck der turbinenseitigen Sperrluftkammer und Lagerkammer ansteigt. Dies würde zu einem erhöhten ISF und durch den einströmenden Ölnebel zu einem erhöhtem verdichterseitigen Lagerkammerdruck führen. Beinur geringfügig gesteuertem verdichterseitige Sperrluftkammerdruck würde die verdichterseitige Druckdifferenz sinken, womit die Gebühr verbunden wäre, daß Ölnebel aus der verdichterseitigen Lagerkammer austritt und in den Strömungskanal gelangt. Bei langsamem Flug in großer Höhe würde dagegen, wegen des geringen Staudruckes, eine Machzahlverschiebung im Triebwerk auftreten, die das Druckverhältnis an der verdichterseitigen Sperrluftkammer weiter ungünstig verkleinert, womit verstärkt Ölnebel aus der verdichterseitigen Lagerkammer austreten und in den Strömungskanal gelangen würden. Mit der angegebenen Lösung könnte somit, gesteuert durch Flugparameter, der Druck der turbinenseitigen Sperrluftkammer gesenkt werden, so daß die notwendige verdichterseitige Drukdifferenz gewährleistet bliebe, ohne mit der Gefahr eventuell entstehenden Zwischenwellen-Feuers rechnen zu müssen.

Mit der angegebenen Lösung ist somit ein im gesamten Kennlinienfeld optimaler ISF bei gleichbleibender ausreichend großer verdichterseitiger Druckdifferenz erzielbar.

In einer weiteren Ausgestaltung (Anspruch 3) wird das Steuerventil unter Verwendung von Flugzustandsparametern, nämlich des Triebwerkseintrittsdrucks oder der Triebwerkseintrittstemperatur oder der Umgebungstemperatur oder des Umgebungsdruckes oder der Bewegungsgeschwindigkeit oder der Bewegungshöhe oder einer Kombination davon gesteuert. Das Ventil kann dabei durch elektronische, elektrische oder pneumatische Kraft bewegt werden. Die Ansteuerung kann über die elektronische Triebwerksregelung (Kennfeldsteuerung) erfolgen. Durch Messung eines oder mehrerer dieser Parameter ist hierdurch vorteilhafterweise eine exakte Bestimmung des riotwendigen ISF ermittelbar. Alternativ ist es möglich, das Steuerventil durch eine Druckdifferenzmessung zwischen Sperrluftleitung und Außenatmosphäre, beispielsweise im Bypasskanal, zu steuern.

Eine weitere Ausführung der Erfindung (Anspruch 4) sieht vor, daß als Betriebsparameter des Steuerventils die Gastemperatur in der Sperrluftleitung verwendet wird. Dies ermöglicht eine besonders einfache Ausführung des Steuerventils, ohne daß Leitungen von entfernt liegenden Meßsensoren verlegt werden müssen.

In weiterer Ausbildung der Erfindung (Anspruch 5) hat das Steuerventil die folgende Steuercharakteristik: In einem unteren Temperaturbereich $\Delta T_1$ ist ein mittlerer Durchflußwert $\dot{V}_1$ des Volumenstromes eingestellt.

In einem mittleren Temperaturbereich$\Delta T_2$ ist ein niedriger Durchflußwert $\dot{V}_2$ eingestellt und in einem hohen Temperaturbereich $T_3$ ist ein hoher Durchflußwert $\dot{V}_3$ eingestellt. Durch diese Steuercharakteristik wird erreicht, daß über den gesamten Betriebsbereich des Triebwerks eine Optimierung des turbinenseitigen Sperrluftdruckes und damit des IFS sowie der verdichterseitigen Druckdifferenz erzielt wird.

Gemäß Anspruch 6 soll der hohe Durchflußwert $\dot{V}_3$ 120 bis 150% des niedrigen Durchflußwertes $\dot{V}_2$ betragen.

Gemäß Anspruch 7 soll der mittlere Durchflußwert $\dot{V}_1$ 110 bis 140% des niedrigen Durchfluwertes $\dot{V}_2$ betragen.

In einer bevorzugten Ausbildung (Anspruch 8) weist das Steuerventil einem im Querschnitt 8-förmigen Rohrabschnitt auf, der aus einem dem Strömungsquerschnitt der Sperrluftleitung angepaßten, beidendig offenen Strömungskanal und einem damit verbundenen, parrallelen beidendig geschlossenen Steuerrohr besteht; dabei ist eine im Inneren des Steuerrohres vorgesehene Bi- metall-Helix einendig fixiert und am anderen Ende an einem Schieber angebracht, wobei der Schieber in den Strömungskanal quer einführbar ist. Hierdurch wird bei sehr einfachem Aufbau vorteilhafterweise ein wirksame Steuerung des Gasstromes in Relation zur Gastemperatur des den Strömungskanal durchfließenden Sperrluftstromes erreicht. Die Einheit ist ohne zusätzliche Anschüsse, insbesondere elektrische Sensoren oder Stromversorgungen nachträglich in Triebwerke einbaubar, und ermöglicht hiermit eine wirksame Umrüstung.

In vorteilhafter Weiterbildung (Anspruch 9) ist radial innerhalb der Bimetall- Helix ein axialer, drehbar gelagerter Haltestift vorgesehen, wobei das schieberseitige Ende der Bimetall-Helix am Schieber angebracht ist und das andere Ende mit dem Haltestift verbunden ist. Dies hat den Voirteil, daß die Bimetall-Helix in ihrer Lage fixiert ist, und der Schieber gut führbar ist. Wird der Abstand zwischen Haltestift und Außengehäuse passend gewählt, so kann in Verbindung mit der richtigen Wicklung der Bimetall-Helix ein selbstgesichertes System erstellt werden, d. h., im Falle eines Helixbruches kann das Ventil noch einmal öffnen (dies verhindert Ölfeuer bei hohen Fluggeschwindigkeiten), jedoch nicht mehr schließen, da dann die Bruchenden auseinanderwandern.

Weiterhin kann der axiale, drehbar gelagerte Haltestift auch zur Kalibrierung des Systems und damit zur Ausgleichung von Fertigungstoleranzen der Bimetall-Helix herangezogen werden, da ein zu einer definierten Temperatur gehöriger Öffnungs-/Schließwinkel exakt justiert werden kann.

In einer weiteren Ausgestaltung (Anspruch 10) ist der Schieber sichelartig ausgebildet und liegt in der Stellung $\dot{V}_3$ mit eine Konkavkante gerade außerhalb des Strömungskanales, in der Stellung $\dot{V}_2$ vollständig im Strömungskanal; und in der Stellung $\dot{V}_1$ ragt er mit seiner Konkavkante noch teilweise in den Strömungskanal hinein. Hierdurch wird die gewünschte Regelcharakteristik des Durchflußsteuerventiles auf einfache Weise erzielt, wobei die zugehörigen Werte $\dot{V}_1$, $\dot{V}_2$ und $\dot{V}_3$ durch Veränderung der geometrischen Maße des Schiebers erzielbar sind.

Eine bevorzugte Weiterbildung der Erfindung (Anspruch 11)sieht vor, daß ein Steuerventil in der Sperrluftleitung einer oder mehrerer Lagerkammern vorgesehen ist. Dies hat den Vorteil, daß für alle im Triebwerk befindlichen Lagerkammern die Druckdifferenzen in Abhängigkeit von den oben genannten Steuerparametern optimiert werden können, so daß keine Gefahr von Ölfeuer und/oder Ölnebelaustritt besteht. Weiterhin kann damit das ganze System im Betriebsbereich auf knappen Druckdifferenzen gehalten werden, wodurch dem Kreisprozeß nicht mehr so viel (Sperr-)luft entzogen wird und die Effektivität (Leistung) steigt.

In einer bevorzugten Ausführung der Erfindung (Anspruch 2) ist das Gasturbinen-Flugtriebwerk dreiwellig ausgeführt, es weist der Reihe nach einen Niederdruckverdichter, einen Mitteldruckverdichter und einen Hochdruckverdichter auf, die nebst zugehörigen Antriebsturbinen mit jeweils koaxialen Nieder-, Mittel- und Hochdruckwellen verbunden und am Triebwerksgehäuse sowie aneinander verdrehbar gelagert sind, worin für die drei Wellen eine gemeinsame turbinenseitige Lagerkammer vorgesehen ist, die über das Steuer-Ventil und die Sperrluftleitung an dem Hochdruckverdichter angeschlossen ist, und worin die Niederdruckwelle in einer vorderen verdichterseitigen Lagerkammer an zwei Lagerstellen abgestützt ist und eine hintere verdichterseitige Lagerkammer für die Lagerung der Mittel -und Hochdruckwelle vorgesehen ist, die zwischen der turbinenseitigen Lagerkammer und der hinteren verdichterseitigen Lagerkammer den Zwischenwellenraum einschließen, in dem hauptsächlich die Strömung über das Ventil gesteuert wird.

Ferner sei vermerkt, daß die Signalverarbeitung für das Steuerventil in einer Triebwerksregeleinheit (MECU, DECU, FADEC) erfolgen kann. Die Umsetzung der Steuersignale erfolgt dabei in einer Kennfeldregelung. Die Steuerung des Ventils kann dabei elektromotorisch, elektrisch oder pneumatisch erfolgen.

Gemäß einer weiteren bevorzugten Ausführung (Anspruch 12) kann das Steuerventil einen Sperrluftstrom steuern, der bis 50 % eines Hauptstromes beträgt. Hierdurch ließe sich das Steuerventil vorteilhafterweise kleiner und leichter bauen, bzw. bei einem Ausfall wäre die Funktionsfähigkeit des Triebwerkes gewahrt.

Im übrigen wäre es vorstellbar, daß das Steuerventil, anstelle der Sperrluftdrosselung, auch eine Sperrluftabblasung bewirkt, wobei die Luft in die Atmosphäre bzw. den Bypass-Kanal des Triebwerkes abgeblasen werden könnte.

Die Erfindung wird nachfolgend anhand der beigefügten Zeichnung näher erläutert. Dabei zeigt:

Fig. 1 einen schematischen axialen Teilschnitt eines Gasturbinen-Flugtriebwerks

Fig. 2 einen Längsschnitt eines Steuerventils,

Fig. 3 einen Querschnitt des Steuerventils gemäß Fig. 2 und

Fig. 4 ein für die Funktion des Steuerventils repräsentatives Durchfluß-Diagramm.

Bei dem in Fig. 1 dargestellten Gasturbinen-Flugtriebwerk 1 ist der einem Hochdruckverdichter 3 vorgeschaltete weitere Verdichter ein Niederdruckverdichter 16, der über eine Niederdruckturbinenwelle 17 mit einer weiteren, also der Niederdruckturbine 18 gekoppelt ist. Die Niederdruckturbinenwelle 17 ist über ein verdichterseitige Lagerung 19a und ein turbinenseitige Lagerung 20b in Lagerträgern 21 und 22 gelagert.

Die Lagerträger 21 und 22 sind mittels Stützrippen 23 und 24 im Gasturbinengehäuse 25 fixiert. Der axial stromab des Niederdruckverdichters 16 angeordnete Hochdruckverdichter 3 ist über eine Hochdruckturbinenwelle 26 mit einer Hochdruckturbine 27 als Antriebsturbine gekoppelt. Die Hochdruckturbinenwelle 26 ist über eine verdichterseitige Lagerung 19b und ein turbinenseitiges Lagerung 20a, in den Lagerträgern 21 und 22 gelagert. Zwischen Hochdruckverdichter 3 und -turbine 27 ist eine Brennkammer 28 gehäusefest angeordnet. Vom Niederdruckverdichter 16 ist eine Sperrluftleitung 29 abgezweigt, die durch die verdichterseitige Stützrippe 23 hindurchgeführt ist und eine verdichterseitige Sperrluftkammer 30 beaufschlagt. Durch Dichtungen abgetrennt, ist radial innerhalb der verdichterseitigen Sperrluftkammer 30 eine verdichterseitige, ölversorgte Lagerkammer 31 vorgesehen, in welcher die verdichterseitige Lagerung 19a,19b angeordnet ist. Analog ist vom Hochdruckverdichter 3 eine Sperrluftleitung 2 abgezweigt, die über ein in dieser enthaltenes Steuerventil 5 und eine turbinenseitige Stützrippe 24 eine turbinenseitige Sperrluftkammer 32 beaufschlagt. Innerhalb der turbinenseitigen Sperrluftkammer 32 ist eine turbinenseitige Lagerkammer 33 vorgesehen, in der sich die turbinenseitige Lagerung 20a und 20b befindet. Es soll die Sperrluftleitung über das Steuerventil 5 stets mit der turbinenseitigen Lagerkammer 33 fluidisch in Verbindung stehen. Zwischen der Niederdruckturbinenwelle 17 und der Hochdruckturbinenwelle 26 ist ein ringförmiger Zwischenwellenraum 34 angeordnet, der mit der turbinenseitigen Lagerkammer 33 und der verdichterseitigen Lagerkammer 31 kommuniziert.

Es steuert das Ventil 5 den Sperrluftdruck in der turbinenseitigen Lagerkammer als Funktion für den Flugzustand repräsentativer Parameter derart, daß über den gesamten Betriebszustand im Zwischenwellenraum 34 eine zur Verhinderung von Öl-Nebelfeuer vorgegebene Durchströmmenge $\dot{V}^1$, $\dot{V}^2$, $\dot{V}^3$ (s.h. auch Fig. 4) unter gleichzeitiger Aufrechthaltung der benötigten Druckdifferenz zwischen verdichterseitiger Lager- und Sperrluftkammer 31;30 vorliegt.

In Fig. 2 ist das Steuerventil 5 im Schnitt gezeigt, das in der Sperrluftleitung 2 gemäß Fig. 1 angeordnet ist. Dieses besteht aus einem im Querschnitt 8-förmigen Rohrabschnitt 6, dessen einer Teil ein beidendig offener Strömungskanal 7 ist, der mit der Sperrluftleitung 2 axial verbunden ist und der dem Strömungsquerschnitt der Sperrluftleitung angepaßt ist. Der andere Teil des Rohrabschnittes 6 besteht aus einem mit dem Strömungskanal 7 verbundenen beidendseitig geschlossenen parallelen Steuerrohr 8, in dem eine auf einem axial angeordneten Haltestift 13 aufgewickelte Bimetall-Helix 9 angebracht ist. Die Bimetall-Helix 9 ist an einem Ende am Haltestift 13 fixiert, am anderen Ende an einem Schieber 12 angebracht, der in den Strömungskanal 7 quer einführbar ist.

In Fig. 3 ist das Durchflußsteuerventil 5 im Querschnitt gezeigt. Der an dem Haltestift 13 befestigte sichelartige Schieber 12 ist in einer kreissektorartigen Aussparung 35 im Ventilgehäuse 36 geführt, derart daß er in den Strömungskanal 7 einführbar ist. In der Stellung nach Fig.3 ist der maximal mögliche Strömungsquerschnitt freigegeben, was der Stellung $V_3$ des Durchflußdiagrammes nach Fig.4 entspricht. In der gestrichelt angedeuteten Stellung 37 des Schiebers 12 wird ein Teil des Strömungskanales 7 durch die Konkavkante 15 des Schiebers 12 abgedeckt, so daß der Strömungskanal 7 entsprechend der Stellung $\dot{V}_1$ (Fig.4) teilweise verengt ist. Die Bohrungen 38 dienen zum Fixieren und Montieren des Steuerventiles 5.

Gemäß dem Durchfluß-Diagramm nach Fig. 4 ist der Durchflußstrom durch das Steuerventil 5 bzw. die Sperrluftleitung 2 als Ordinate aufgetragen, während die Temperatur T der Sperrluft als Abszisse nach rechts aufgetragen ist. Dabei ist erkennbar, daß in einem unteren Temperaturbereich $\Delta T_1$ ein mittlerer Durchflußwert $\dot{V}_1$ eingestellt ist, in einem mittleren Temperaturbereich $\Delta T_2$ ein niedriger Durchflußwert $\dot{V}_2$ und einem hohen Temperaturbereich $\Delta T_3$ ein hoher Durchflußwert $\dot{V}_3$ zugeordnet ist. Dem Temperaturbereich $\Delta T_1$ entspricht die in Fig. 3 gestrichelt gezeigte Stellung des Schiebers 37 ($\dot{V}_1$), während dem Durchflußwert $\dot{V}_3$ die in Fig. 3 in ausgezogenen Linien gezeigte Stellung des Schiebers 12 entspricht. In der Stellung $\dot{V}_2$ ist der Schieber 12 so in den Strömungskanal 7 eingeschoben, daß sowohl dessen Konkavkante 14 als auch desen Konvexkante 15 innerhalb des Strömungskanales 7 liegen.

## Patentansprüche

1. Gasturbinen-Flugtriebwerk mit einem mehrstufigen Hochdruckverdichter (3) und einer Antriebsturbine (27) an einer Welle (26), einem mehrstufigen, dem Hochdruckverdichter (3) vorgeschalteten weiteren Verdichter (16) und weiterer Antriebsturbine (18) an einer anderen Welle (17), worin die Wellen (17,26) über eine verdichterseitige Lagerung (19a,19b) und über eine turbinenseitige Lagerung (20a, 20b) am Triebwerksgehäuse sowie relativ zueinander verdrehbar sind, mit die jeweilige Lagerung (19a,19b; 20a,20b) enthaltenden, ölversorgten Lagerkammern (31;33) und diesen zugeordneten Sperrluftkammern (30;32), worin die verdichterseitige Sperrluftkammer (30) mit aus dem weiteren Verdichter (16) entnommener Luft verhältnismäßig niedrigen Druckes und unter Ausbildung eines bestimmten Differenzdruckes gegenüber der betreffenden Lagerkammer (31) zum Hauptkanal hin abgedichtet ist und mit einer Sperrluftleitung (2) und einem in dieser enthaltenen durch Betriebsparameter gesteuerten Ventil (5) für die Zufuhr aus dem Hochdruckverdichter (9) entnommener Druckluft in die verdichterseitige Sperrluftkammer (30), dadurch gekennzeichnet, daß

– beide Lagerkammern (31,33) von den zugehörigen Sperrluftkammern (30;32) umgeben sind und über einen zwischen beiden Wellen (17;26) ausgebildeten Zwischenwellenraum (34) kommunizieren,

– die Sperrluftleitung (2) über das Ventil (5) stets mit der turbinenseitigen Lagerkammer (33) fluidisch in Verbindung steht,

– das Ventil (5) den Sperrluftdruck in der turbinenseitigen Lagerkammer (33) als Funktion für den Flugzustand repräsentativer Parameter derart steuert, daß über den gesamten Betriebszustand im Zwischenwellenraum (34) eine zur Verhinderung von Öl-Nebelfeuer vorgegebene Durchströmmenge ($\dot{V}^1,\dot{V}^2,\dot{V}^3$) unter gleichzeitiger Aufrechthaltung der benötigten Druckdifferenz zwischen verdichterseitiger Lager- und Sperrluftkammer (31;30) vorliegt.

2. Gasturbinen-Flugtriebwerk nach Anspruch 1 dadurch gekennzeichnet, daß der Reihe nach ein Niederdruckverdichter, ein Mitteldruckverdichter und ein Hochdruckverdichter, nebst zugehörigen Antriebsturbinen mit jeweils koaxialen Nieder-, Mittel- und Hochdruckwellen verbunden und am Triebwerkgehäuse sowie aneinander verdrehbar gelagert sind, worin für die drei Wellen eine gemeinsame turbinenseitige Lagerkammer vorgesehen ist, die über das Ventil und die Sperrluftleitung an dem Hochdruckverdichter angeschlossen ist, und worin die Niederdruckwelle in einer vorderen verdichterseitigen Lagerkammer an zwei Lagerstellen abgestützt ist und eine hintere verdichterseitige Lagerkammer für die Lagerung der Mittel- und Hochdruckwelle vorgesehen ist, die zwischen der turbinenseitigen Lagerkammer und der hinteren verdichterseitigen Lagerkammer den Zwischenwellenraum einschließen, in dem hauptsächlich die Strömung über das Ventil gesteuert wird.

3. Triebwerk nach Anspruch 1, dadurch gekennzeichnet, daß die zur Ventilsteuerung verwendeten Flugzustandsparameter der Triebwerkseintrittsdruck, die Triebwerkeintrittstemperatur, die Umgebungstemperatur, der Umgebungsdruck, die Bewegungsgeschwindigkeit, die Bewegungshöhe oder eine Kombination hiervon sind.

4. Triebwerk nach Anspruch 1, dadurch gekennzeichnet, daß als Betriebsparameter für die Steuerung des Ventils (5) die Gastemperatur in der Sperrluftleitung (2) verwendet wird.

5. Triebwerk nach einem der Ansprüche 1 bis 4, dadurch gekennzeichnet, daß das Ventil (5) in einem unteren Temperaturbereich$\Delta T_1$ ein mittlerer Durchflußwert $\dot{V}_1$, in einem mittleren Temperaturbereich$\Delta T_2$ einen niedrigen Durchflußwert $\dot{V}_2$ und in einem hohen Temperaturbereich$\Delta T_3$ einen hohen Durchflußwert $\dot{V}_3$ einstellt.

6. Triebwerk nach Anspruch 5, dadurch gekennzeichnet, daß der hohe Durchflußwert $\dot{V}_3$ 120 bis 150% des niedrigen Durchflußwertes $\dot{V}_2$ beträgt.

7. Triebwerk nach Anspruch 5 oder 6, dadurch gekennzeichnet, daß der mittlere Durchflußwert $\dot{V}_1$ 110 bis 140% des niedrigen Durchflußwertes $\dot{V}_2$ beträgt.

8. Triebwerk nach einem der Ansprüche 1 bis 7, dadurch gekennzeichnet, daß das Durchflußsteuerventil (5) einen im Querschnitt 8-förmigen Rohrabschnitt (6) aufweist, der aus einem dem Strömungsquerschnitt der Sperrluftleitung (2) angepaßten, beidendig offenen Strömungskanal (7) und einem damit verbundenen, parallelen, beidendseitig geschlossenen Steuerrohr (8) besteht und eine im Inneren des Steuerrohres (8) vorgesehene Bimetall-Helix (9) einendig fixiert ist und am anderen Ende (11) an einem Schieber (12) angebracht ist, wobei der Schieber (12) in den Strömungskanal (7) quer einführbar ist.

9. Triebwerk nach Anspruch 8, dadurch gekennzeichnet, daß radial innerhalb der Bimetall-Helix (9) ein axialer, drehbar gelagerter Haltestift (13) vorgesehen ist, wobei das schieberseitige Ende der Bimetall-Helix (9) am Schieber (12) angebracht ist, und dessen anderes Ende mit dem Haltestift (13) verbunden ist.

10. Triebwerk nach Anspruch 8 oder 9, dadurch gekennzeichnet, daß der Schieber (12) sichelartig ausgebildet ist und in der Stellung $\dot{V}_3$ mit seiner Konkavkante (14) gerade außerhalb des Strömungskanals (7) liegt, in der Stellung $\dot{V}_2$ vollständig im Strömungskanal (7) liegt und in der Stellung $\dot{V}_1$ mit seiner Konkavkante (15) noch teilweise in den Strömungskanal (7) hineinragt.

11. Triebwerk nach einem der Ansprüche 1 bis 10, dadurch gekennzeichnet, daß ein Ventil in der Sperrluftleitung einer oder mehrerer Lagerkammern vorgesehen ist.

12. Triebwerk nach einem oder mehreren der vorhergehenden Ansprüche, dadurch gekennzeichnet, daß das Ventil (5) einen Sperrluftstrom steuert, der bis 50% des Hauptstromes beträgt.

## Claims

1. Gas turbine aeroplane engine with a multi-stage high-pressure compressor (3) and an engine turbine (27) on a shaft (26), a further multi-stage compressor (16) connected in series to the high-pressure compressor (3), and further engine turbines (18) on a different shaft (17), whereby the shafts (17, 26) are rotatable on the engine mechanism casing as well as in relation to each other by means of a mounting (19a, 19b) on the compressor side and a mounting (20a, 20b) on the turbine side, with mounting chambers (31, 33) supplied with oil, containing the mounting device (19a, 19b; 20a, 20b) in each case, and sealing air chambers (30, 32) associated with these storage chambers, whereby the sealing air chamber (30) on the compressor side is sealed in the direction of the main channel with air of comparatively low pressure taken from the other compressor (16) when a certain pressure differential in relation to the storage chamber (31) in question is formed, and using an air closure channel (2) and a valve (5) controlled by operating parameters, contained therein for the supply of compressed air taken from the high-pressure compressor (9) into the sealing air chamber (30) on the compressor side, characterised in that:

- both mounting chambers (31, 33) are enclosed by the sealing air chambers (30, 32) belonging thereto, and communicate via a chamber (34) between the two shafts (17, 26);
- the sealing air pipe (2) is constantly in connection with the mounting chamber (33) on the turbine side via the valve (5);
- the valve (5) controls the sealing air pressure in the mounting chamber (33) on the turbine side as a function for the parameters representing the conditions of flight in such a way that throughout the entire operating time, to prevent oil vapour fires, a preset flow rate ($\dot{V}^1$, $\dot{V}^2$, $\dot{V}^3$) exists in the chamber (34) between the shafts with a simultaneous upholding of the necessary pressure differential between the compressor side storage chamber and sealing air chamber (31, 30).

2. Gas turbine air aeroplane engine according to Claim 1, characterised in that, in the following order, a low pressure compressor, a medium-pressure compressor, and a high-pressure compressor, besides associated aeroplane engines with coaxial low, interim, and high-pressure shafts in each case, are connected and rotatably mounted on the engine casing as well as on each other, whereby a common turbine side mounting chamber is provided for the three shafts, which chamber is connected to the high-pressure compressor via the valve and the sealing air pipe, and whereby the low pressure shaft is supported in a front compressor side mounting chamber at two mounting points and there is provided a rear compressor side storage chamber for the mounting of the medium-pressure and high-pressure shafts, which shafts delimit, between the turbine side mounting chamber and the rear compressor side mounting chamber, the chamber between the shafts, in which the flow is mainly controlled by the valve.

3. Engine according to Claim 1, characterised in that the parameters of conditions of flight used to control the valve are the engine inlet pressure, the engine inlet temperature, the ambient temperature, the ambient pressure, the altitude or a combination of these.

4. Engine according to Claim 1, characterised in that the gas temperature in the sealing air pipe (2) is used as the operating parameter for the control of the valve (5).

5. Engine according to one of Claims 1 to 4, characterised in that the valve (5) sets a medium flow value $\dot{V}_1$ in a lower temperature range $T_1$, a low flow value $\dot{V}_2$ in a medium temperature range $T_2$, and a high flow value $\dot{V}_3$ in a high temperature range $T_3$.

6. Engine according to Claim 5, characterised in that the high flow value $\dot{V}_3$ is 120 to 150% of the low flow value $\dot{V}_2$.

7. Engine according to Claim 5 or 6, characterised in that the medium flow value $\dot{V}_1$ is 110 to 140% of the low flow value $\dot{V}_2$.

8. Engine according to one of Claims 1 to 7, characterised in that the flow control valve (5) has a pipe section (6) that is octagonal in cross-section, which consists of a flow channel (7) adapted to the flow cross-section of the sealing air pipe (2), open at both ends, and a parallel control pipe (8), closed at both ends, connected thereto, and a bimetallic helix (9), is provided in the interior of the control pipe (8), secured at one end, and connected to a plunger (12) at the other end (11), wherein the plunger (12) can be introduced at right angles into the flow channel (7).

9. Engine according to Claim 8, characterised in that an axial, rotatably mounted retaining pin (13) is provided radially inside the bimetallic helix (9), wherein the end of the bimetallic helix (9) that is on the side of the plunger is mounted on the plunger (12), and the other end thereof is connected to the retaining pin (13).

10. Engine according to Claim 8 or 9, characterised in that the plunger (12) is formed in the manner of a sickle and, in the setting $\dot{V}_3$ lies with its concave edge (14) just outside the flow channel, lies completely within the flow channel (7) in the setting $\dot{V}_2$, and, in the setting $\dot{V}_1$, still partly projects into the flow channel (7) with its concave edge.

11. Engine according to one of Claims 1 to 10, characterised in that a valve is provided in the sealing air pipe of one or more storage chambers.

12. Engine according to one or more of the preceding claims, characterised in that the valve (5) controls a sealed air flow which forms up to 50% of the main flow.

## Revendications

1. Groupe motopropulseur à turbines à gaz avec un compresseur (3) haute pression et une turbine d'entraînement (27) sur un arbre (26), un autre compresseur (16) à plusieurs étages branché avant le compresseur haute pression (3) et une autre turbine d'entraînement (18) sur un autre arbre (17), dans lequel les arbres (17, 26) peuvent tourner par l'intermédiaire d'un dispositif de paliers (19a, 19b) côté compresseur et par l'intermédiaire d'un dispositif de palier côté turbine (20a, 20b) dans le carter du groupe moteur ainsi que relativement l'un par rapport à l'autre, avec des chambres de palier (31, 33) contenant le dispositif respectif (19a, 19b); 20a, 20b), alimentées en huile et des réserves (chambres) d'air de barrage (30 ; 32) associés aux premiers, dans lequel la réserve d'air de barrage (30) côté compresseur est isolée par rapport au canal principal par de l'air à pression relativement basse prélevé à l'autre compresseur (16) et par formation d'une différence de pression déterminée vis-à-vis de la chambre de palier (31) correspondant et avec une conduite d'air de barrage (2) et une soupape (5) installée sur celle-ci et commandée par des paramètres de fonctionnement pour amener de l'air sous pression prélevé du compresseur haute pression (9) dans la réserve d'air de barrage (30) côté compresseur, caractérisé

– en ce que les deux chambres de palier (31, 33) sont entourées par les réserves d'air de barrage correspondantes et sont en communication par un arbre intermédiaire (34) existant entre les deux arbres (17 ; 26) ;

– en ce que la conduite d'air de barrage (2) est en communication fluide par la soupape (5) avec la chambre de palier (33) côté turbine ;

– en ce que la soupape (5) commande la pression d'air de barrage dans la chambre de palier (33) côté turbine en fonction des paramètres représentatifs de l'état du vol, de sorte que par l'intermédiaire de l'état de marche dans l'arbre intermédiaire (34) il existe une quantité de flux de passage donnée ($\dot{V}^1$,$\dot{V}^2$, $\dot{V}^3$) pour empêcher l'inflammation de brouillard d'huile en maintenant en même temps la différence de pression nécessaire entre la chambre de palier et la réserve d'air de barrage (31 ; 30) du côté compresseur.

2. Groupe motopropulseur à turbine à gaz selon la revendication 1, caractérisé en ce que sont reliés l'un derrière l'autre un compresseur basse pression, un compresseur moyenne pression et un compresseur haute pression, avec des turbines d'entraînement correspondantes par des arbres basse pression, des arbres moyenne pression et des arbres haute pression respectivement coaxiaux et ils sont logés dans le carter du groupe motopropulseur et peuvent tourner ensemble, groupe dans lequel il est prévu pour les trois arbres une chambre de palier commun côté turbine, qui est reliée au compresseur haute pression par la soupape et la conduite d'air de barrage, et dans lequel l'arbre basse pression s'appuie en deux points dans une chambre de palier située à l'avant du côté compresseur et il est prévu pour le placement de l'arbre moyenne pression et de l'arbre haute pression une chambre de palier arrière côté compresseur, arbres qui enferment l'arbre intermédiaire situé entre la chambre de palier côté turbine et la chambre de palier arrière côté compresseur, arbre intermédiaire dans lequel est dirigé principalement le flux par l'intermédiaire de la soupape.

3. Groupe motopropulseur selon la revendication 1, caractérisé en ce que les paramètres de l'état de vol utilisés pour la commande de la soupape sont, la pression à l'entrée du groupe motopropulseur, la température à l'entrée du groupe, la température ambiante, la pression ambiante, la vitesse de déplacement, la hauteur de déplacement ou une combinaison de ces données.

4. Groupe motopropulseur selon la revendication 1, caractérisé en ce qu'on utilise comme paramètre de fonctionnement pour la commande de la soupape (5) la température du gaz dans la conduite d'air de barrage (2).

5. Groupe motopropulseur selon une des revendications 1 à 4, caractérisé en ce que soupape (5) ajuste dans une zone de température inférieure $\Delta T_1$ une valeur de flux de passage moyenne $\dot{V}_1$, dans une zone de température moyenne $\Delta T_2$ une valeur de flux de passage faible et dans une zone de température élevée $\Delta T_3$ une valeur de flux de passage élevée $\dot{V}_3$.

6. Groupe motopropulseur selon la revendication 5, caractérisé en ce que la valeur de flux de passage élevée $\dot{V}_3$ atteint 120 à 150 % de la valeur de flux de passage faible $\dot{V}_2$.

7. Groupe motopropulseur selon une des revendications 5 ou 6, caractérisé en ce que la valeur de flux de passage moyenne $\dot{V}_1$ atteint 110 à 140 % de la valeur de flux de passage faible $\dot{V}_2$.

8. Groupe motopropulseur suivant une des revendications 1 à 7, caractérisé en ce que la soupape (5) d'entraînement du passage du flux a un tronçon tubulaire (6) avec une section transversale en forme de 8, qui se compose d'un canal d'écoulement (7) ouvert aux deux extrémités, ajusté à la section transversale de flux de la conduite d'air de barrage (2) et d'un tube de commande (8) relié et parallèle au canal, fermé à ses deux extrémités et en ce qu'une hélice bimétallique (9) prévue à l'intérieur du tube de direction (8) est fixée à une extrémité et est appliquée à l'autre extrémité (11) sur un tiroir (12) qui peut être introduit dans le canal de flux (7) transversalement.

9. Groupe motopropulseur selon la revendication 8, caractérisé en ce que radialement à l'intérieur de l'hélice (9) bimétallique est prévue une tige de fixation (13) montée à rotation possible, l'extrémité côté tiroir de l'hélice bimétallique (9) étant fixée sur le tiroir (12) et son autre extrémité étant reliée à la tige de fixation (13).

10. Groupe motopropulseur selon les revendications 8 ou 9, caractérisé en ce que le tiroir (12) est réalisé en forme de faucille et est situé dans la position $\dot{V}_3$ avec sa face concave (14) juste en dehors du canal de flux (7) et dépasse dans la position $\dot{V}_1$ avec son bord concave (15) encore partiellement à l'intérieur du canal de flux (7).

11. Groupe motopropulseur selon une des caractéristiques 1 à 10, caractérisé en ce qu'une soupape est prévue dans la conduite d'air de barrage d'un ou plusieurs chambres de palier.

12. Groupe motopropulseur selon une ou plusieurs des caractéristiques précédentes, caractérisé en ce que la soupape (5) commande un écoulement de l'air de barrage, qui s'élève à 50 % du courant principal.

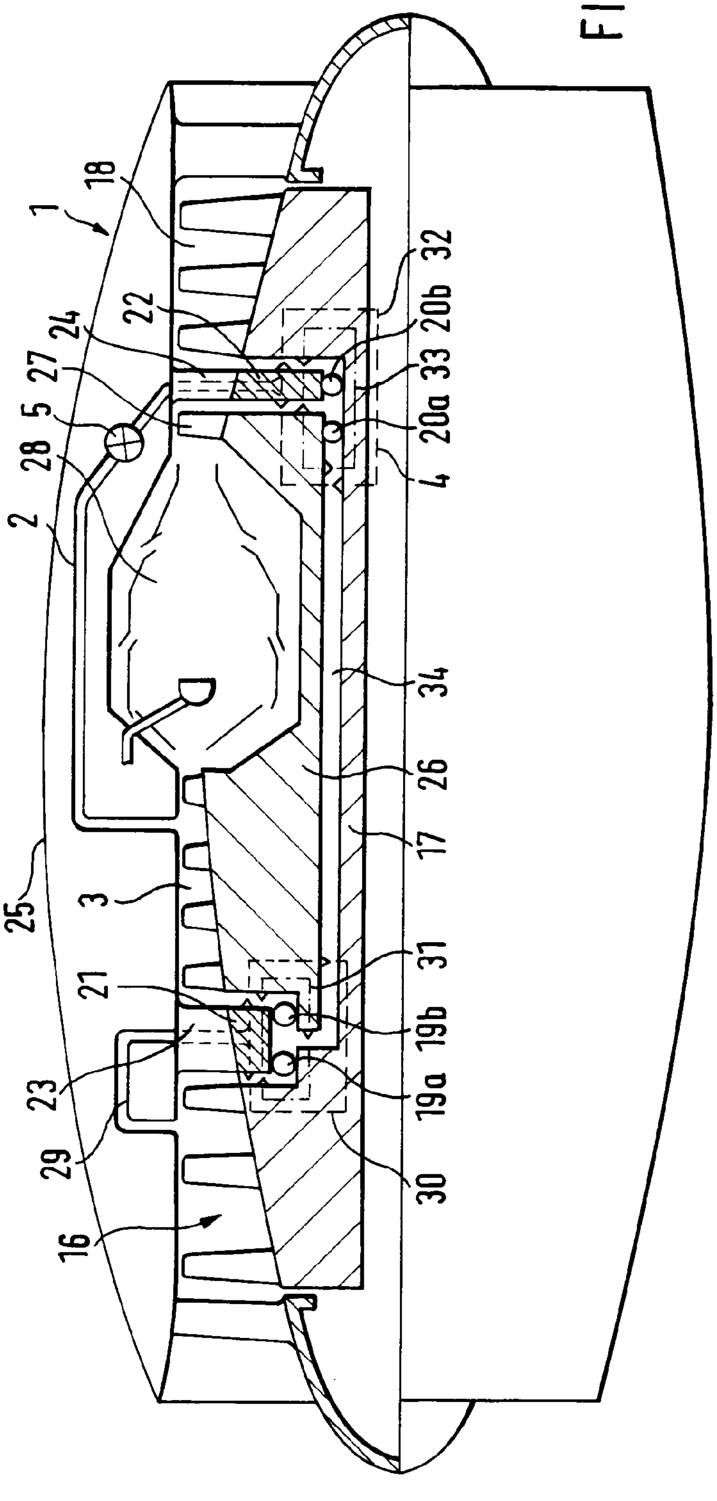
1
2
3
4
5
16
17
18
19a
19b
20a
20b
21
22
23
24
25
26
27
28
29
30
31
32
33
34

FIG. 1

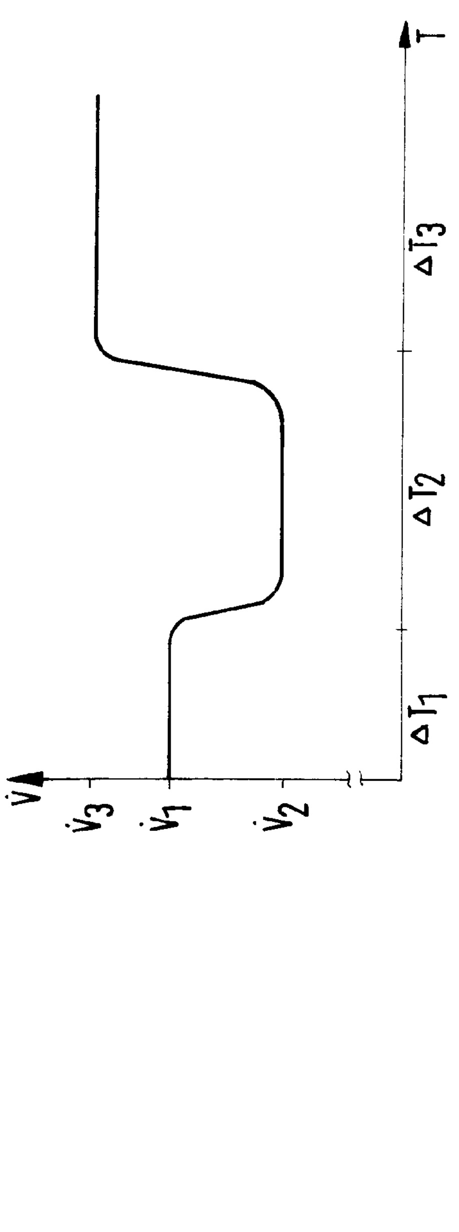
$\dot{V}$
$\dot{V}_3$
$\dot{V}_1$
$\dot{V}_2$
$\Delta T_1$
$\Delta T_2$
$\Delta T_3$
T

FIG. 4

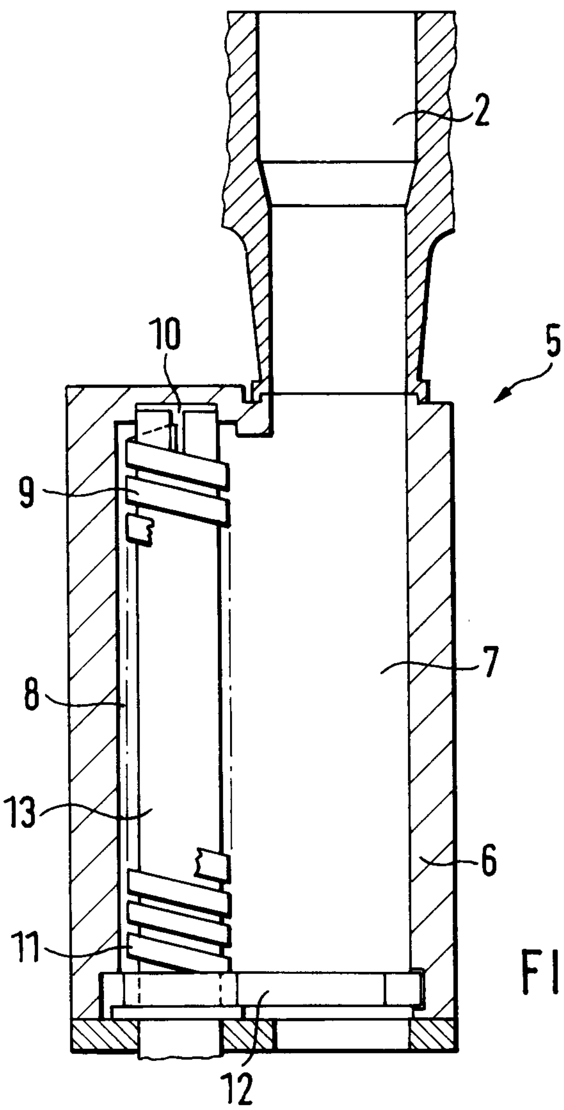


FIG.2

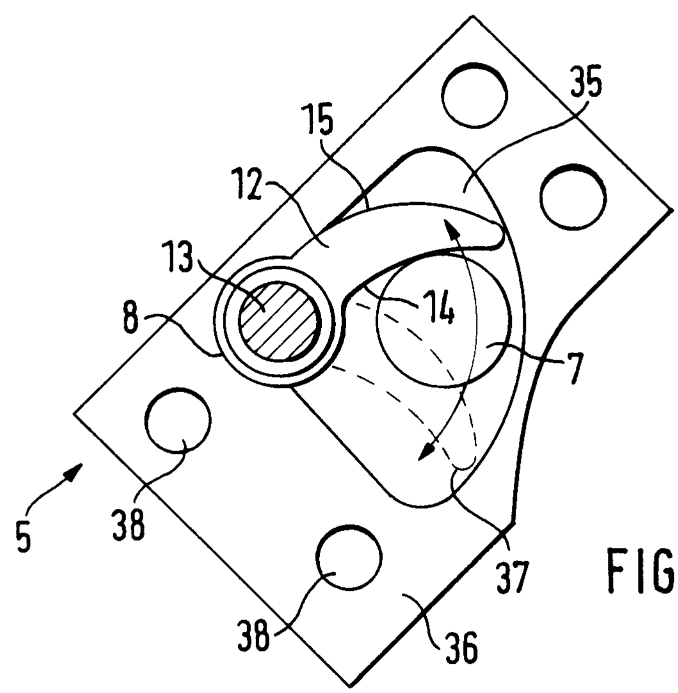


FIG.3